# EUROPÄISCHE PATENTSCHRIFT

(11) **EP 0 969 171 B1**
(45) Veröffentlichungstag und Bekanntmachung des Hinweises auf die Patenterteilung: **15.10.2003**
(21) Anmeldenummer: 99108218.1
(22) Anmeldetag: 27.04.1999
(51) Int. Cl.: E05C 19/06, B60R 19/04, B60D 1/60, B60R 19/02

(54) **Abdeckung**
Cover
Couvercle

(30) Priorität: 02.07.1998 DE 29811815 U
(43) Veröffentlichungstag der Anmeldung: 05.01.2000
(73) Patentinhaber: REHAU AG + Co, 95111 Rehau (DE)
(72) Erfinder: Heinrich, Matthias c/o Rehau AG + Co., 95111 Rehau (DE)

(56) Entgegenhaltungen:
- EP-A- 0 337 220
- EP-A- 0 829 600
- DE-A- 2 753 539
- DE-U- 1 908 121

## Beschreibung

Die Erfindung betrifft eine Abdeckung zum Öffnen und Verschließen von Durchbrüchen in Formteilen, wobei die Abdeckung als flächiges Bauteil auf einer Längsseite mit einer Auskragung den zugeordneten Rand des Durchbruches untergreift und an der gegenüberliegenden Längsseite über Verschlußelemente mit dem zugeordneten Rand des Durchbruches lösbar verbunden ist.

In der DE 43 42 981 A1 ist eine gattungsgemäße Abdeckung beschrieben.
Diese Abdeckung hat die Funktion, eine Öffnung im Stoßfänger eines Kraftfahrzeuges zu verschließen. Die Öffnung im Stoßfänger des Kraftfahrzeuges dient dazu, eine Anhängerkupplung hindurchzuführen und diese zu montieren bzw. zu demontieren. Bei demontierter Anhängerkupplung soll die Abdeckung die Öffnung des Stoßfängers verschließen und sich unauffällig in das Gesamtbild einfügen.

Die Abdeckung besteht aus einer Klappe, die über ein flexibles Band mit einem Rahmen verbunden ist. Der Rahmen wird auf der innenliegenden Seite der Stoßfängerabdeckung im Bereich der Öffnung befestigt. Dieser Rahmen dient als Anlagefläche für die bündig in der Öffnung liegende Klappe. Im Einbauzustand hintergreifen die angeformten Clipse der Klappe den inneren Rand des Rahmens und gewährleisten somit einen sicheren Sitz der Klappe im Stoßfänger des Kraftfahrzeuges.
Vorteilhaft bei dieser Abdeckung wird gesehen, daß im Randbereich der Klappe Aussparungen für ein Werkzeug vorgesehen sind, mit dessen Hilfe die hintergreifenden Clipse außer Eingriff bringbar sind. Weiterhin vorteilhaft soll sein, daß die Klappe bei montierter Anhängerkupplung nicht unkontrolliert an dem flexiblen Band hängt, sondern über die Clipse in der Anhängerkupplung gehalten wird.

Nachteilig bei dieser Lösung wird der mehrteilige Aufbau, bestehend aus Klappe, flexiblem Band und Rahmen, gesehen.

Hierbei entstehen zwangsläufig höhere Kosten bei der Herstellung dieser Abdeckung, da der Materialanteil ca. doppelt so hoch ist.
Ein weiterer negativer Aspekt bei dieser Abdeckung ist die Notwendigkeit eines separaten Arbeitsganges zur Befestigung des Rahmens im Bereich der Öffnung auf der innenliegenden Seite der Stoßfängerabdeckung.

Zur sicheren Befestigung der Klappe in der Öffnung der Stoßfängerabdeckung muß der Hintergriff der Clipse entsprechend groß ausgelegt werden. Damit ist jedoch ein hoher Kraftaufwand beim Verschließen und Verrasten der Klappe erforderlich.
Ein weiterer Nachteil dieser Lösung besteht darin, daß vor dem Entfernen der Klappe aus der Öffnung der Stoßfängerabdeckung die Clipse mit einem Werkzeug außer Eingriff gebracht werden müssen. Diese Vorgehensweise kann zur Beschädigung der Clipse bis zu deren Zerstörung führen. Weiterhin nachteilig ist die Tatsache, daß durch das verwendete Werkzeug eine Schädigung der lackierten Oberflächen von Klappe und Stoßfängerabdeckung möglich sind.

Wird nach dem Entfernen der Klappe aus der Öffnung der Stoßfängerabdeckung die Anhängerkupplung montiert, muß die lose am flexiblen Band hängende Abdeckung separat befestigt werden. Diese Befestigung erfolgt über die gleichen Clipse, die die Klappe in der Öffnung der Stoßfängerabdeckung fixieren. Dadurch werden diese Clipse einer mehrfachen Belastung unterworfen, da sowohl an der Anhängerkupplung als auch an der Öffnung der Stoßfängerabdeckung die Clipse außer Eingriff zu bringen sind und durch Kraftaufwand wieder zu montieren sind.
Ein weiterer Nachteil dieser Abdeckung wird darin gesehen, daß die Clipse zerstört werden können. Dieser Fall tritt ein, wenn die Anhängerkupplung demontiert wird, ohne vorher die von der Straße verschmutzte Klappe aus ihr zu entfemen.

Bei einer ggf. vorzunehmenden Lackierung dieser Abdeckung offenbart sich ein weiterer Nachteil. Dieser besteht darin, daß gleichzeitig die Oberfläche einschließlich des Randes der Klappe und die untere Fläche einschließlich des Randes des Rahmens lackiert werden muß. Hierzu werden zusätzlich separate und kostenintensive Haltevorrichtungen benötigt.

Hier setzt die Erfindung ein, die es sich zur Aufgabe gestellt hat, die Nachteile des bekannten Standes der Technik dahingehend zu verbessern, eine leicht bedienbare, fest fixierte und kostengünstige Abdeckung herzustellen.

Erfindungsgemäß wird diese Aufgabe dadurch gelöst, daß an einer Längsseite der Abdeckung wenigstens zwei Rastelemente mit je einem Rastvorsprung einstückig angeformt sind, welche mit Rastausnehmungen im zugeordneten Rand des Durchbruches kommunizieren, daß zwischen den zwei mittleren Rastelementen ein Griffelement angeordnet ist, welches unter Freisparung seiner zum Rand des Durchbruches gerichteten Griffrandes lediglich in den vorderen Eckbereichen mit den Rastvorsprüngen der zugeordneten Rastelemente einstückig verbunden ist, und daß das Maß der Freisparung in der Höhe wenigstens gleich der Ausladung der Rastvorsprünge der zugeordneten Rastelemente ist.

Der große Vorteil dieser erfindungsgemäßen Abdeckung besteht neben der Einteiligkeit darin, daß durch den Eingriff in das Griffelement bei gleichzeitigem Ziehen die Rastvorsprünge der zugeordneten Rastelemente außer Eingriff bringbar sind. Nach einem genau definierbaren Drehwinkel trifft das Griffelement auf einen Anschlag und dadurch wird vorteilhafterweise ganz automatisch ein Überbiegen und eventuelles Brechen der Rastelemente verhindert. Nachdem die Rastvorsprünge der Rastelemente außer Eingriff gebracht worden sind, läßt sich die erfindungsgemäße Abdeckung vorteilhafterweise durch das Griffelement aus dem Durchbruch eines Formteiles leicht entnehmen.

In einer weiteren vorteilhaften Ausführungsform ist der dem Griffelement gegenüberliegende freie Rand der Abdeckung drehbeweglich mit dem korrespondierenden freien Rand des Durchbruches verbunden.

Die Rastvorsprünge der zugeordneten Rastelemente sind so dimensioniert, daß die Abdeckung in Funktionsstellung fest fixiert ist und den Durchbruch des Formteiles verschließt. Das Entfemen der Abdeckung dagegen ist ohne ein zusätzliches Werkzeug und ohne großen Kraftaufwand möglich.

Im Inneren des Griffelementes ist wenigstens ein von der Oberfläche wegragender Rand einstückig angeformt, der es dem Benutzer erleichtert, das Griffelement so zu bewegen, daß die Rastvorsprünge der zugeordneten Rastelemente außer Eingriff bringbar sind.

Damit der dazu notwendige Kraftaufwand weiter reduziert werden kann, ist die Freisparung zwischen dem Griffrand des Griffelementes und der Abdeckung vorteilhafterweise umlaufend bis zur Verbindungsstelle mit den Rastvorsprüngen der zugeordneten Rastelemente ausgeführt.

Anhand der folgenden schematischen Darstellungen wird die Erfindung näher beschrieben. Diese zeigen:
- Figur 1: eine Gesamtansicht der erfindungsgemäßen Abdeckung
- Figur 2: eine Schnittdarstellung der erfindungsgemäßen Abdeckung im Durchbruch eines Formteiles
- Figur 3: eine Detaildarstellung der Rastelemente mit dem zugeordneten Rand des Durchbruches des Formteiles.

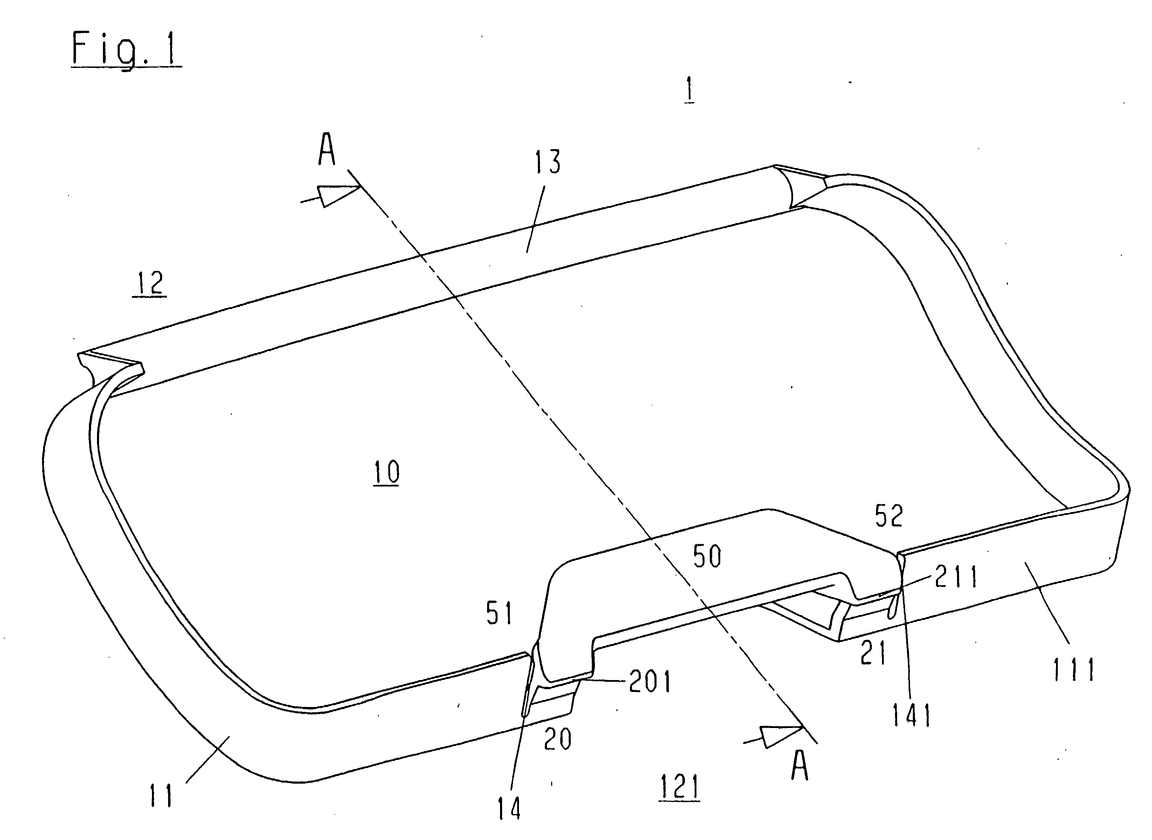

Eine Ausführungsform der erfindungsgemäßen Abdeckung 1 ist in Figur 1 dargestellt. Die Grundfläche 10 der Abdeckung 1 ist von den umlaufenden Rändern 11, 111 begrenzt, die an der Längsseite 12 durch eine Auskragung 13 miteinander verbunden sind. An der gegenüberliegenden Längsseite 121 der Abdeckung 1 sind die Rastelemente 20, 21 einstückig an die Grundfläche 10 der Abdeckung 1 angeformt. Zwischen den Rastelementen 20, 21 und den zugeordneten freien Enden der umlaufenden Ränder 11, 111 sind die Zwischenräume 14, 141 erkennbar, die bis nahezu an die Grundfläche 10 der Abdeckung 1 hinunterreichen. Die Rastvorsprünge 201, 211 werden durch das Griffelement 50 verbunden.

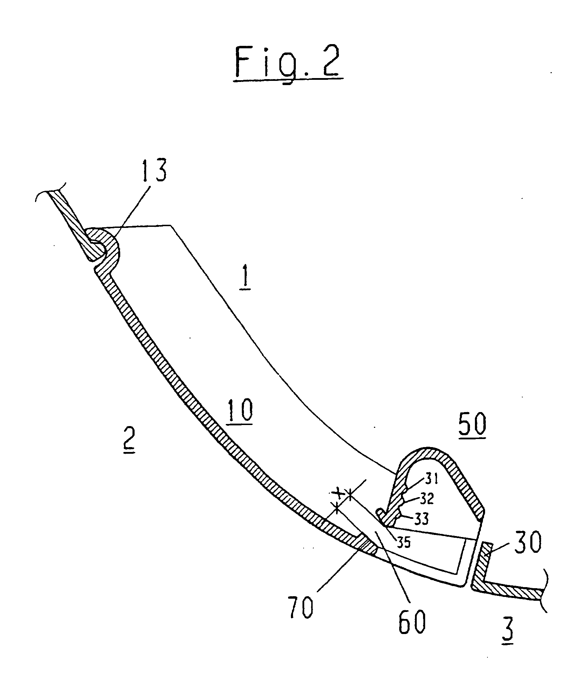

In Figur 2 ist eine bevorzugte Ausführungsform der erfindungsgemäßen Abdeckung 1 im Durchbruch 2 eines Formteiles 3 dargestellt.

Dabei umgreift die Auskragung 13 der Abdeckung 1 den zugeordneten Rand des Durchbruches 2. Die Rastvorsprünge 201, 211 der zugeordneten Rastelemente 20, 21 hintergreifen der Rand 30 des Formteiles 3 und fixieren so die Abdeckung 1 im Durchbruch 2 des Formteiles 3. Im Inneren des Griffelementes 50 sind vorteilhafterweise drei von der Oberfläche wegragende Ränder 31, 32, 33 dargestellt. Zwischen der Grundfläche 10 der Abdeckung 1 und dem Griffelement 50 ist eine Freisparung 60 dargestellt. Diese Freisparung wird begrenzt von einem Anschlag 70, der auf der Grundfläche 10 der Abdeckung 1 einstückig angeformt ist und dem Griffrand 35 des Griffelementes 50. Die Höhe der Freisparung 60 ist durch das Maß X definiert.

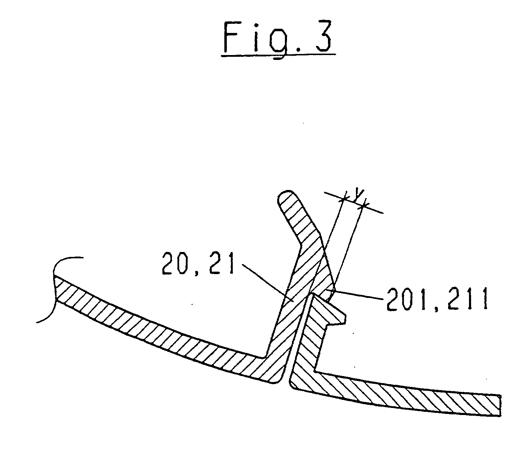

In Figur 3 ist eine Detaildarstellung der Rastelemente 20, 21 erkennbar. Die Rastvorsprünge 201, 211 sind durch die Ausladung Y gekennzeichnet.
In dieser vorteilhaften Ausführungsform ist die Ausladung Y der Rastvorsprünge 201, 211 der zugeordneten Rastelemente 20, 21 gleich dem Maß X der Freisparung 60.

## Patentansprüche

1. Abdeckung zum Öffnen und Verschließen von Durchbrüchen in Formteilen, wobei die Abdeckung als flächiges Bauteil auf einer Längsseite mit einer Auskragung (13) den zugeordneten Rand des Durchbruches untergreift und an der gegenüberliegenden Längsseite (121) über Verschlußelemente (20, 21) mit dem zugeordneten Rand des Durchbruches lösbar verbunden ist,
**dadurch gekennzeichnet,**
**daß** an der gegenüberliegenden Längsseite (121) der Abdeckung (1) wenigstens zwei Rastelemente (20, 21) mit je einem Rastvorsprung (201, 211) einstückig angeformt sind, welche mit Rastausnehmungen im zugeordneten Rand (30) des Durchbruches (2) kommunizieren, daß zwischen den zwei mittleren Rastelementen (20, 21)ein Griffelement (50) angeordnet ist, welches unter Freisparung (60) seines zum Rand des Durchbruches gerichteten Griffrandes (35) lediglich in den vorderen Eckbereichen (51, 52)mit den Rastvorsprüngen (201, 211) der zugeordneten Rastelemente (20, 21) einstückig verbunden ist, und daß das Maß X der Freisparung (60) in der Höhe wenigstens gleich der Ausladung Y der Rastvorsprünge (201, 211) der zugeordneten Rastelemente (20, 21) ist.

2. Abdeckung nach Anspruch 1, **dadurch gekennzeichnet, daß** das Griffelement (50) vollumfänglich in die Abdeckung (1) zurückversetzt ist und daß die Freisparung (60) zwischen dem Griffrand (35) und der Abdeckung (1) umlaufend bis zur Verbindungsstelle mit den Rastvorsprüngen (201, 211) der zugeordneten Rastelemente (20, 21) verläuft.

## Claims

1. Cover to open and close openings in mouldings, in which the cover, which is a flat component that grips with a lip (13) on one long side beneath the opposing edge of the opening and is joined detachably with locking elements (20, 21) on the opposite long side (121) to the opposing edge of the opening, **characterised in that** at least two engaging elements (20, 21) each with an engaging projection (201, 211) are moulded in one piece to the opposite long side (121) of the cover (1), which correspond to engaging recesses in the opposing edge (30) of the opening (2) and a grip element (50) is located between the two middle engaging elements (20, 21) which is only connected in one piece to the engaging projections (201, 211) of the associated engaging elements (20, 21) at the front corners (51, 52) with a gap (60) in the edge of its grip (35) facing the edge of the opening and the dimension X of the gap (60) has a height of at least the protrusion Y of the engaging projections (201, 211) of the associated engaging elements (20, 21).

2. Cover according to Claim 1, **characterised in that** the grip element (50) is fully recessed in the cover (1) and the gap (60) between the edge of the grip (35) and the cover (1 ) runs around to the connecting points of the engaging projections (201, 211) and the associated engaging elements (20, 21).

## Revendications

1. Cache permettant l'ouverture et la fermeture de percements dans des pièces moulées, le cache en tant qu'élément plan saisissant le bord correspondant de l'ouverture sur un côté longitudinal par en-dessous avec une partie en saillie (13) et étant relié de manière amovible sur le côté longitudinal opposé (121) par des éléments de verrouillage (20,21) avec le bord correspondant du percement, **caractérisé en ce que** du côté longitudinal opposé (121) du cache (1) au moins deux éléments encliquetables (20, 21) comportant chacun une saillie à cran (201, 211 ) sont formés d'un tenant, ceux-ci communiquant avec des évidements à encliquetage dans le bord correspondant (30) du percement (2), qu'entre les deux éléments encliquetables médians (20, 21) est disposé un élément à levier (50) uniquement relié d'un tenant par évidemment (60) de son bord de levier dirigé vers le bord du percement (35) dans les zones d'angles avant (51, 52) avec les saillies à crans (201, 211 ) des éléments encliquetables correspondants (20, 21) et que la dimension X de la hauteur de l'évidemment (60) est au moins égale à la dimension Y des saillies à crans (201, 211) des éléments encliquetables correspondants (20, 21).

2. Cache selon la revendication 1, **caractérisé en ce que** l'élément à levier (50) est totalement décalé en arrière dans le cache (1) et que l'évidemment (60) entre le bord du levier (35) et le cache (1) suit de manière périphérique les saillies à crans (201, 211) des éléments encliquetables correspondants (20, 21) jusqu'au point de raccordement.
